# EUROPÄISCHE PATENTSCHRIFT

(11) **EP 1 984 145 B1**
(45) Veröffentlichungstag und Bekanntmachung des Hinweises auf die Patenterteilung: **23.09.2009**
(21) Anmeldenummer: 07703412.2
(22) Anmeldetag: 12.02.2007
(51) Int. Cl.: B24B 1/00, B24B 7/17, B24B 19/08, G05B 19/18

(54) **VERFAHREN ZUM SCHLEIFEN VON STABFÖRMIGEN WERKSTÜCKEN, SCHLEIFMASCHINE ZUR DURCHFÜHRUNG DES VERFAHRENS UND SCHLEIFZELLE IN ZWILLINGSANORDNUNG**
METHOD OF GRINDING BAR-SHAPED WORKPIECES, GRINDING MACHINE FOR CARRYING OUT THE METHOD, AND GRINDING CELL IN TWIN ARRANGEMENT
PROCEDE DE MEULAGE DE PIECES EN FORME DE BARREAU, MEULEUSE PERMETTANT DE METTRE EN OEUVRE LE PROCEDE ET CELLULE DOUBLE DE MEULAGE

(30) Priorität: 15.02.2006 DE 102006007055
(43) Veröffentlichungstag der Anmeldung: 29.10.2008
(73) Patentinhaber: Erwin Junker Grinding Technology a.s., 27601 MélnÍk (CZ)
(72) Erfinder: HIMMELSBACH, Georg, 77716 Haslach (DE); MÜLLER, Hubert, 77787 Nordrach (DE)
(74) Vertreter: Leske, Thomas
(86) Internationale Anmeldenummer: PCT/EP2007/001183
(87) Internationale Veröffentlichungsnummer: WO 2007/093345

(56) Entgegenhaltungen:
- EP-A2- 0 576 043
- JP-A- 6 015 553
- PL-B2- 161 480

## Beschreibung

Die Erfindung betrifft ein Verfahren zum Schleifen von stabförmigen Werkstücken, die einen unrunden, durch ebene und/oder gekrümmte Linien gebildeten Querschnitt und ebene, parallel zueinander verlaufende Stirnseiten aufweisen.

Ein bevorzugtes und beispielhaft genanntes Anwendurigsgebiet derartiger stabförmiger Werkstücke sind mechanische Stell-, Schalt- und Steuereinrichtungen, in denen stabförmige Teile als Stellglieder Bewegungen und Kräfte übertragen. In diesem Fall können die stabförmigen Werkstücke eine Länge zwischen vorzugsweise 20 und 80 mm und einen quadratischen Querschnitt mit einer Kantenlänge zwischen vorzugsweise 4 und 15 mm haben. Als Werkstoff kommen unterschiedliche Metalle, aber auch Keramik-Werkstoffe in Frage. Durch den unrunden Querschnitt wird bei entsprechender Führung erreicht, dass die stabförmigen Stellglieder sich im eingebauten Zustand nur in ihrer Längsrichtung bewegen, aber nicht verdrehen.

In diesem Anwendungsfall werden an das fertig geschliffene stabförmige Werkstück sehr hohe Anforderungen gestellt; genannt seien vor allem die Maßhaltigkeit der Grundabmessungen, die Parallelität der Stirnflächen, die exakte Einhaltung des rechten Winkels zwischen den Längs- und Stirnseiten, die Ebenheit der Stirnflächen und die maximale Rauheitsprofilhöhe Rz.

Die in konkreten Anwendungsfälle verlangte Genauigkeit kann derzeit nur erreicht werden, indem jede Seite des stabförmigen Werkstücks einzeln durch HorizontalFlachschleifen bearbeitet wird. Dokument PL 161 480 offenbart eine Vorrichtung und ein Verfahren hierzu. Diese Methode ist aber auf geometrische Querschnitte mit geraden Kanten beschränkt. Die Schleifzone ist bei diesem Schleifverfahren auf Grund des Flächenkontakts mit der Schleifscheibe nur schwierig mit Kühlschmierstoff zu versorgen. Aus diesem Grund kann man nicht dasselbe Zeitsparvolumen wie beim Umfangschleifen erreichen. Außerdem muss das Werkstück dabei so häufig gewendet und umgespannt werden, dass eine wirtschaftliche Massenfertigung nicht gegeben ist.

Zum Schleifen der Stirnflächen von Bolzen und vergleichbaren Teilen ist die Methode des Planschleifens mit Doppelscheiben bekannt, zum Beispiel von einer Maschine der Anmelderin mit der Typenbezeichnung Saturn H ( Prospekt Junker, partner for precision, Stand 6. Februar 2002, Zeichnungs-Nummern 86 und 87). Hierbei dient als Werkstückhalterung eine rotierende Trägerscheibe, die in ihrem Umfangsbereich axial verlaufende Bohrungen aufweist. In den Bohrungen befinden sich die Bolzen, die seitlich über die Breitseiten der Trägerscheibe vorstehen. Zwei im Abstand voneinander gleichachsig angeordnete rotierende Schleifscheiben umgreifen die rotierende Trägerscheibe in ihrem Randbereich, wobei der Abstand der Schleifscheiben voneinander dem Schleifmaß der Bolzen entspricht. Auf diese Weise werden die Stirnseiten einer größeren Zahl von Bolzen gleichzeitig von den Breitseiten der Schleifscheiben plangeschliffen.

Dieses bekannte Verfahren ist nicht ohne weiteres auf das Schleifen der genannten stabförmigen Werkstücke zu übertragen. Zum einen fallen die Rohlinge dieser Werkstücke mit unterschiedlichem Schleifaufmaß an. Eine Halterung in einfachen Ausnehmungen einer Trägerscheibe ist damit nicht mehr möglich, zumal unrunde Querschnitte vorausgesetzt werden. Ein unpräziser Sitz in der Trägerscheibe würde die Parallelität der Stirnflächen ebenso beeinträchtigen wie das Einhalten des exakten rechten Winkels zwischen den Stirn- und Seitenflächen. Das Schleifen in einzelnen Losgrößen steht zum anderen auch den Anforderungen einer Großserienproduktion entgegen, wenn neben den Stirnseiten auch ebene Längsseiten der stabförmigen Werkstücke in größerer Zahl geschliffen werden sollen. Zudem besteht der Bedarf, die unrunden Querschnitte der stabförmigen Teile variabel und dabei auch mit gekrümmten Linien zu gestalten. Es kann sogar eine Längskontur der stabförmigen Werkstücke gefordert sein, die vom parallelen Verlauf zweier Geraden abweicht.

Der Erfindung liegt daher die Aufgabe zugrunde, das Verfahren der eingangs genannten Art so zu gestalten, dass eine wirtschaftliche Massenfertigung in Verbindung mit einem sehr guten Schleifergebnis erreicht wird, wobei zudem unterschiedliche Querschnittsformen und Längskonturen der stabförmigen Werkstücke geschliffen werden können.

Die Lösung dieser Aufgabe gelingt mit einem Verfahren, das die Gesamtheit der Merkmale des Anspruchs 1 aufweist.

Mit dem erfindungsgemäßen Verfahren wird die vollständige Schleifbearbeitung des stabförmigen Werkstücks in zwei Teilvorgängen in einer Weise durchgeführt, dass die Komplettbearbeitung auf einer einzigen Schleifmaschine in einem kontinuierlichen Fertigungsvorgang erfolgen kann. Dabei erfolgen nacheinander zwei verschiedene Einspannstellungen oder Einspannungen, die fließend ineinander übergehen. Zunächst wird jedes Werkstück einzeln an seinen Längsseiten eingespannt, also nicht etwa nur in die profilierte Ausnehmung einer Trägerscheibe eingesetzt, dies ist die erste Spannstellung. In dieser erfolgt zumindest das Fertigschleifen der beiden Stirnseiten. In der Regel werden die Stirnseiten in dieser Einspannung vor- und fertiggeschliffen. Ein getrenntes Vorschleifen ist aber an dieser Stelle nicht immer erforderlich. Bei entsprechender Gestaltung der Spannvorrichtung führt das Doppelplanschleifen zu einem ausgezeichneten Ergebnis an den Stirnseiten. Das nach wie vor eingespannte, also in der ersten Spannstellung befindliche Werkstück wird sodann mittels dieser Spannvorrichtung zwischen zwei gleichachsig im Abstand voneinander befindliche Spannbacken überführt und von diesen an seinen Stirnseiten eingespannt, die bereits fertig geschliffen sind und dadurch die besten Voraussetzungen für eine präzise Weiterbearbeitung bieten.

Die Spannbacken bewirken die zweite Spannstellung des stabförmigen Werkstücks; die erste Spannstellung wird jetzt aufgehoben. Indem nunmehr die beiden Spannbacken synchron und phasengleich gesteuert gedreht werden, kann an dem Werkstück ein CNC-gesteuertes Umfangsschleifen nach dem Prinzip der C-X-Interpolation vorgenommen werden. Dabei entspricht jeder Drehstellung des von den beiden Spannbacken in Drehung versetzten Werkstückes (Drehachse C) ein bestimmter Abstand der Schleifscheibe in Richtung der X-Achse. Die Einzelheiten hierzu sind dem Fachmann auf dem Gebiet der Schleiftechnik von dem CNC-gesteuerten Unrundschleifen geläufig und brauchen daher nicht näher beschrieben zu werden.

Wenn das stabförmige Werkstück nach dem Prinzip des Unrundschleifens bearbeitet wird, liegt - im Gegensatz zum Flachschleifen - eine Linienberührung zwischen der Schleifscheibe und dem Werkstück vor. Die Kühlmittelzufuhr ist dadurch verbessert, und es wird ein höheres Zeitsparvolumen erreicht, so dass die Bearbeitungszeit erheblich verkürzt wird.

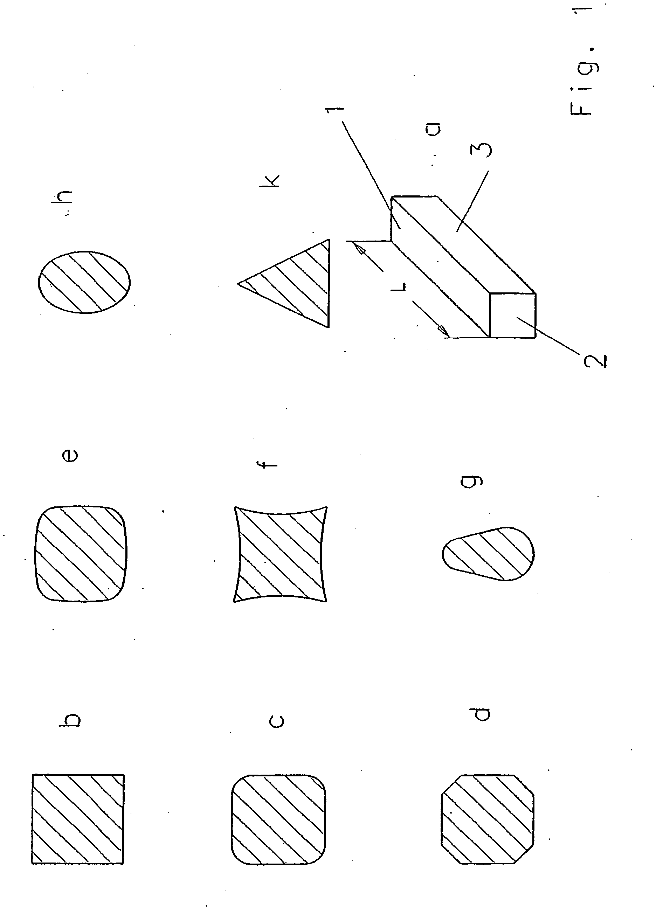

Mit dem CNC-gesteuerten Umfangsschleifen können stabförmige Werkstücke mit unterschiedlichen Querschnitten vor- und fertig geschliffen werden, also einfache quadratische oder rechteckige Querschnitte mit abgerundeten Längskanten oder ebenen Fasen an den Längskanten bis hin zu prismatischen Querschnitten oder auch Querschnitte mit unterschiedlich gekrümmten Begrenzungslinien bis hin zu Mischformen aus allem. Mit der einfachen Möglichkeit, in einem Zuge ebene Längsseiten mit gebrochenen oder abgerundeten Kanten zu schleifen, ebenso aber auch Querschnitte mit durchweg gekrümmten Konturen, werden die Probleme der Gratbildung als Folge eines Planschleifens vermieden. Eine Auswahl der Möglichkeiten ist in der Figur 1 des Ausführungsbeispiels zusammengestellt.

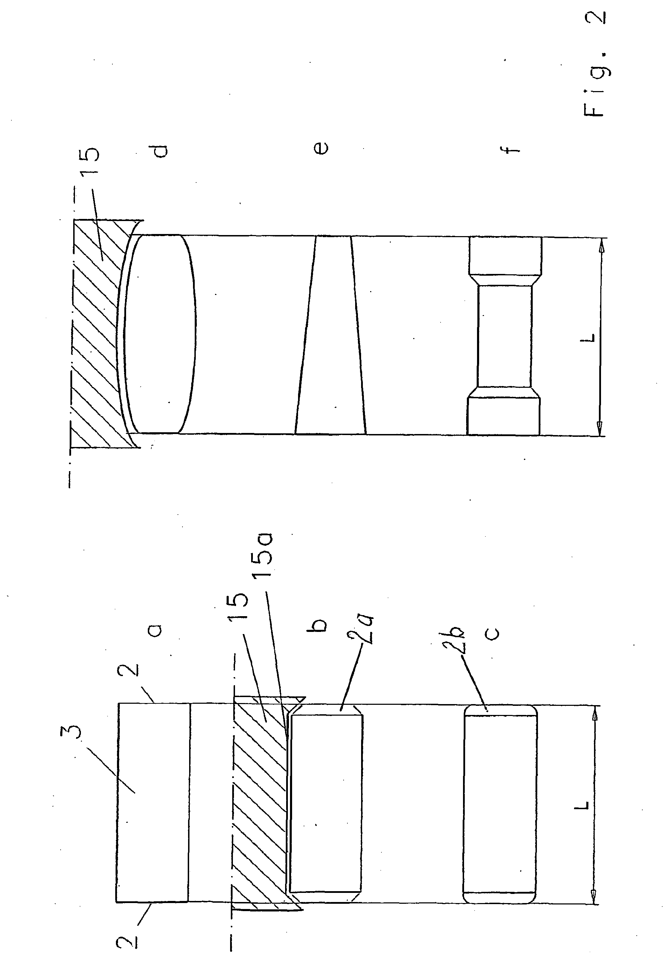

Wenn das Umfangsschleifen durch eine die gesamte Länge des stabförmigen Werkstücks überdeckende profilierte Schleifscheibe erfolgt, kann auch die Längskontur des Werkstücks unterschiedlich gestaltet werden. Beispiele hierfür sind in der Figur 2 des Ausführungsbeispiels zusammengestellt. Zu dieser unterschiedlichen Längskontur gehören auch stirnseitige Fasen und Abrundungen.

Mit dem Auseinanderfahren der Spannbacken nach dem Fertigschleifen ist die zweite Spannstellung gelöst, und das fertige stabförmige Werkstück wird an eine Entladeeinrichtung übergeben.

Im Anspruch 2 sind vorteilhafte Einzelheiten zu dem ersten Teilvorgang, dem Doppelplanschleifen der Stirnseiten, angegeben. In der Regel werden sowohl das in seiner ersten Einspannstellung befindliche stabförmige Werkstück als auch die beiden rotierenden ersten Schleifscheiben in der Richtung der X-Achse verfahrbar sein. Dabei wird das eingespannte Werkstück bis an die ersten Schleifscheiben herangefahren, während der Vorgang des Planschleifens selbst durch Verfahren der in üblicher Weise an einer Schleifspindel gelagerten ersten Schleifscheiben erfolgt. Es ist denkbar, die ersten Schleifscheiben stationär zu lagern und auch den Schleifvorgang selbst durch Bewegen des eingespannten Werkstücks in der Richtung der X-Achse vorzunehmen. Die beiden ersten Schleifscheiben umgreifen bei dem Schleifvorgang das stabförmige Werkstück, das dabei mit seiner Längsrichtung parallel zu der gemeinsamen Rotationsachse der ersten Schleifscheiben verläuft. Das Verfahren kann an dieser Stelle aber auch so geführt werden, dass das Werkstück ortsfest in seiner Position verbleibt und die Schleifscheibe in Längs- und Querrichtung zum Werkstück verfahrbar ist.

Die Weiterbildung gemäß Anspruch 3 gibt eine erste vorteilhafte Möglichkeit an, wie der erste Teilvorgang des Planschleifens in den zweiten Teilvorgang des Umfangsschleifens übergehen kann. Es wird hierzu die Lösung gewählt, die ersten Schleifscheiben einerseits und mindestens eine zweite Schleifscheibe andererseits auf einem gemeinsamen Schleifspindelstock zu lagern, der verschwenkt werden kann. Durch Verschwenken des Schleifspindelstocks können wahlweise die ersten Schleifscheiben oder die zweite Schleifscheibe in die Schleifstellung an dem stabförmigen Werkstück gebracht werden. Für die beim Schleifen erforderliche Zustellbewegung in Richtung der X-Achse wird man in erster Linie den gemeinsamen Schleifspindelstock in der Richtung der X-Achse gesteuert verfahren.

Eine andere vorteilhafte Lösung für den Übergang von dem ersten auf den zweiten Teilvorgang ist in Anspruch 4 angegeben. Hierbei sind die ersten Schleifscheiben zum Planschleifen der Stirnseiten und die zweite Schleifscheibe zum Umfangsschleifen der Längsseiten auf einer gemeinsamen Rotationsachse angeordnet und stets gemeinsam angetrieben. Allerdings kann dabei für jeden Teilvorgang eine unterschiedliche, auf den Teilvorgang optimal eingestellte Drehzahl gewählt werden. Der Übergang von der ersten Spannstellung in die zweite Spannstellung erfordert es, dass das stabförmige Werkstück auch parallel zu der gemeinsamen Rotationsachse der Schleifscheiben, also in der Richtung der C-Achse, verschoben werden muss. Das Verschieben kann in der ersten Spannstellung durch die hierzu erforderliche Spanneinrichtung erfolgen, die somit in der Richtung der X-Achse und in der Richtung der C-Achse verfahrbar sein muss. Das Verschieben kann aber auch durch Verfahren der Spannbacken oder der zu ihrer Lagerung erforderlichen Werkstückspindelstöcke erfolgen.

Anspruch 5 zeigt eine vorteilhafte Möglichkeit auf, das stabförmige Werkstück in seiner ersten Spannstellung auf eine Weise in einer Spannstation einzuspannen, die selbstzentrierend ist, so dass die Längsmitte des Werkstücks beim Schleifen unabhängig vom Schleifaufmaß des Rohlings bleibt. Die Spannstation muss gemäß Anspruch 6 in den Richtungen der X-Achse und der C-Achse gesteuert beweglich sein, wenn sie die mehrfache Aufgabe des Förderns, Halterns beim Planschleifen und Überführen in die zweite Spannstellung allein, d. h. bei ruhenden Werkstückspindelstöcken und Spannbacken erfüllen soll.

Eine weitere vorteilhafte Ausgestaltung besteht gemäß Anspruch 7 darin, dass die ausgleichenden Beladegreifer der Spannstation zugleich als Messfühler zu Ermittlung des Schleifaufmaßes dienen, das für den Ablauf des Umfangsschleifens maßgeblich ist.

Die Erfindung betrifft auch die Schleifmaschine, mit der das erfindungsgemäße Verfahren durchgeführt werden kann. Eine erste erfinderische Lösung hierzu ist in dem Anspruch 8 angegeben. Hierbei erfolgt der Übergang von dem Planschleifen der Stirnseiten auf das Längsschleifen der Längsseiten durch einen verschiebbaren und verschwenkbaren Schleifspindelstock. Diese Ausführung der Schleifmaschine entspricht dem Verfahren gemäß Anspruch 3.

Eine andere Lösung für die erfindungsgemäß ausgeführte Schleifmaschine ist Gegenstand des Anspruchs 9. Diese Schleifmaschine ist entsprechend dem Verfahren nach Anspruch 4 ausgeführt. Die unterschiedlichen Schleifscheiben für das Plan- und Umfangsschleifen befinden sich als Schleifscheibensatz auf der gemeinsamen Rotationsachse einer Schleifspindel, die in der Richtung der X-Achse gesteuert verfahrbar ist. Die Spannstation hat die Aufgabe, in der angegebenen Weise das stabförmige Werkstück zu übernehmen und nacheinander den unterschiedlichen Schleifscheiben zuzuführen, wobei auch der Übergang von der ersten in die zweite Spannstellung durchzuführen ist.

Die beiden Schleifmaschinen nach den Ansprüchen 8 und 9 bieten den Vorteil, dass jeweils ein einzelnes stabförmiges Werkstück durch die Maschine hindurchläuft, dabei in der ersten Spannstellung an den Stirnseiten plangeschliffen und in der zweiten Spannstellung an den Längsseiten durch Umfangsschleifen bearbeitet wird. Nach dem Hindurchlaufen durch die Schleifmaschine ist das stabförmige Werkstück fertig geschliffen. Es brauchen keine Teile zusammengeführt werden, so dass der Flächenbedarf verringert ist. Damit sind die Voraussetzungen für eine perfekte Fließfertigung erfüllt. Die Handling-Zeiten sind nur einmal erforderlich.

Die erfindungsgemäßen Schleifmaschinen arbeiten mit bewährten Grundelementen der modernen Schleiftechnik, die aber durch ein intelligentes Förder- und Spannsystem auf neue Weise miteinander verknüpft werden. Der Aufbau der Schleifmaschinen bleibt einfach. Das Beladen der Schleifmaschinen kann mit einer Ladezelle durch eine Ladeluke rechts oder links erfolgen, so dass die sogenannte "Schlüsselloch-Lösung" möglich ist, bei der die Werkstücke seitlich zugeführt werden und die Bedienung der Maschine allein von der Vorderseite aus erfolgt, also an der Seite der Gleitbahn.

Mit den erfindungsgemäßen Schleifmaschinen können auch kleinere Losgrößen wirtschaftlich gefertigt werden, weil sie dazu eingerichtet sind, an einem bestimmten Werkstück-Typ eine Komplettbearbeitung vorzunehmen. Es besteht also eine hohe Stückzahl-Flexibilität. Insbesondere durch das numerisch gesteuerte Umfangsschleifen nach dem Prinzip der C-X-Interpolation ist auch eine hohe Typenflexibilität gegeben; die Rüstzeiten beim Umstellen auf eine andere Querschnittsform der stabförmigen Werkstücke können sehr kurz sein. Beispielsweise ist es möglich, bei einem stabförmigen Werkstück mit quadratischem Querschnitt die Umstellung von durch Fasen gebrochenen Längskanten auf abgerundete Längskanten innerhalb von 3 Minuten vorzunehmen, weil die Umstellung lediglich durch das Teileprogramm für das zu erzeugende Werkstück erfolgt. Dabei passt sich auch die Fase zusammen mit dem Querschnitt an.

Die Ansprüche 8 und 9 sind darauf gerichtet, dass die zweite Schleifscheibe der erfindungsgemäßen Schleifmaschinen an die Längskontur des fertigen stabförmigen Werkstücks angepasst ist und auch dessen stirnseitige Fasen mit umfassen kann. Die Bearbeitung der Werkstück-Seitenflächen durch das numerisch gesteuerte Umfangsschleifen nach dem Prinzip der C-X-Interpolation ermöglicht es, dass Abrundungsradien oder Fasen an den Kanten ohne Taktzeitverlängerung zusammen mit den Seitenflächen geschliffen werden. Das gilt auch für die stirnseitigen Fasen, wenn die Kontur der Schleifscheibe entsprechend profiliert ist. Die stirnseitigen Fasen werden in derselben Einspannung in einem Konturzug zeitgleich mit den Seitenflächen und mit den längs verlaufenden Fasen geschliffen. Ein Umspannen entfällt. Der Prozess ist insgesamt in Bezug auf die geforderten Geometriedaten (Maß-; Form- und Lagetoleranzen) wesentlich einfacher und sicherer beherrschbar. Es wird nicht nur Bearbeitungszeit eingespannt, sondern insbesondere wird auch die mit dem Umspannen verbundene Gefahr von Ungenauigkeiten vermieden. Es kommt noch hinzu, dass die Kontur der Schleifscheiben beim Abrichten mit einer Genauigkeit eingestellt werden kann, die im µm-Bereich liegt. Somit ergeben sich stirnseitige Fasen, die über ihre gesamte Länge und untereinander stets genau dieselbe Breite haben. Auch in dieser Hinsicht wird somit durch die Erfindung zugleich mit der Schnelligkeit der Bearbeitung auch die Genauigkeit des Ergebnisses verbessert.

Weitere vorteilhafte Weiterbildungen der erfindungsgemäßen Schleifmaschinen sind in den Ansprüchen 12 bis 14 angegeben und in dem Ausführungsbeispiel näher erläutert.

Anspruch 15 hat eine Schleifzelle zum Gegenstand, der eine Zwillingsanordnung zweier erfindungsgemäßer Schleifmaschinen mit einer gemeinsame Ladezelle vorgesehen ist. Investitionsaufwand und Flächenbedarf werden dadurch weiter verringert, und es bleibt der Vorteil der Bedienung allein von der Vorderseite erhalten.

Die Erfindung wird anschließend anhand von in den Zeichnungen dargestellten Ausführungsbeispielen noch näher erläutert. Die Figuren zeigen das Folgende:
Fig. 1 gibt verschiedene unrunde Querschnitte von stabförmigen Werkstücken wieder, die gemäß der Erfindung geschliffen werden sollen.
Fig. 2 zeigt unterschiedliche Längskonturen, die das zu schleifende stabförmige Werkstück haben kann.
Fig. 3 ist eine Ansicht von oben auf eine erste Ausführungsform einer Schleifmaschine zur Durchführung des erfindungsgemäßen Verfahrens.
Fig. 4 verdeutlicht das Doppelplanschleifen, das Teil des erfindungsgemäßen Verfahrens ist.
Fig. 5 ist eine Prinzipdarstellung eines Teils der Bewegungsabläufe, die das stabförmige Werkstück beim Schleifen durchführt.
Fig. 6 erläutert das Prinzip der C-X-Interpolation beim Umfangsschleifen des stabförmigen Werkstücks.
Fig. 7 zeigt entsprechend der Figur 3 eine Ansicht von oben auf eine zweite Ausführungsform einer Schleifmaschine gemäß der Erfindung.
Gemäß Fig. 8 sind zwei erfindungsgemäße Schleifmaschinen in Zwillingsanordnung zu einer Schleifzelle zusammengefasst.
Figur 1 vermittelt beispielhaft einen Eindruck von der Form, welche die Querschnitte des zu schleifenden stabförmigen Werkstücks 1 haben können. In der einfachsten Form ist das stabförmige Werkstück 1 ein quaderförmiges Stäbchen mit quadratischen Stirnseiten 2 und rechteckförmigen Längsseiten 3, s. Fig. 1 a. Ein bevorzugtes Anwendungsgebiet derartiger stabförmiger Werkstücke 1 sind Stellglieder in mechanischen Schalt- oder Stelleinrichtungen. Diese Stellglieder können eine Länge L zwischen 20 und 80 mm und einen Querschnitt zwischen 4 und 15 mm haben; jedoch handelt es sich hierbei nur um ein Beispiel. Als Material derartiger stabförmiger Werkstücke 1 kommen unterschiedliche Metalle, aber auch Keramik-Werkstoffe in Frage. Je nach der gewünschten Funktion kann der Querschnitt auch von der Form des geometrisch strengen Quadrats (b) abweichen. So können die Längskanten abgerundet (c) oder mit ebenen Fasen (d) versehen sein. Die Quadratform kann auch zu einem Quadrat mit konvexen Flächen (e) oder mit konkaven Flächen (f) variiert werden. Ferner sind Konturen mit allein durch gekrümmte Linien begrenzten Querschnitten (g), also auch ovale Konturen (h) oder Polygone jeder Ordnung (k) möglich, bei denen die für den quadratischen Querschnitt angegebenen Abwandlungen gleichfalls Gültigkeit haben.

Auch die Längskontur des zu schleifenden stabförmigen Werkstücks 1 ist keinesfalls auf die geometrisch strenge Form des Rechtecks festgelegt, wie sie noch einmal in Figur 2a dargestellt ist.

Figur 2 zeigt die Längsseiten 3 des stabförmigen Werkstücks 1 in unterschiedlichen Varianten. So können auch im Übergang zu den Stirnseiten 2 ebene Fasen 2a (Fig. 2b) oder Abrundungen 2b (Fig. 2c) vorhanden sein. Die strenge Rechteckform kann zu einer balligen Form (d) variiert werden. Ferner sind konische Längskonturen (e) möglich, aber auch eine rechteckige Grundform mit abgesenktem Mittelteil (f).

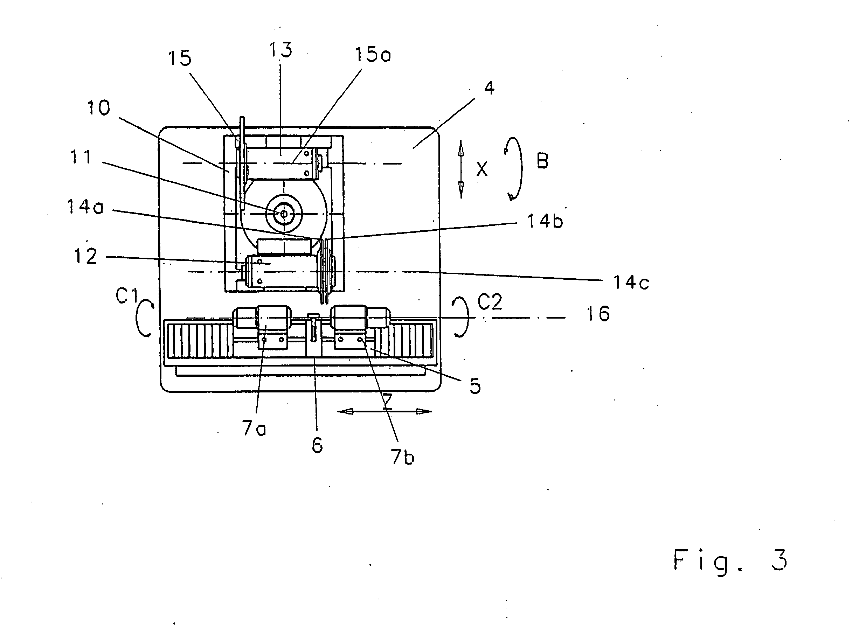

Figur 3 stellt die erste Ausführungsform einer Schleifmaschine dar, mit der ausgehend von einem Rohling in Quaderform die Komplettbearbeitung des stabförmigen Werkstücks 1 möglich ist. Auf einem Maschinenbett 4 ist ein Schleiftisch mit einer Gleitbahn 5 ausgebildet, auf der eine Spannstation 6 in der Richtung dieser Gleitbahn 5 und senkrecht dazu verfahrbar ist. Zu beiden Seiten der Spannstation 6 befinden sich die Werkstückspindelstöcke 7a und 7b, die ebenfalls auf der Gleitbahn verfahrbar sind. Die Werkstückspindelstöcke 7a, 7b können einzeln oder gemeinsam verfahrbar sein. In den Werkstückspindelstöcken 7a, 7b sind Spannbacken 8a, 8b gelagert, die zur Drehung angetrieben werden können. Dabei ist eine Steuerung vorgesehen, durch die die beiden gleichachsig im Abstand von einander befindlichen Spannbacken 8a, 8b streng synchron und phasengleich verdreht werden.

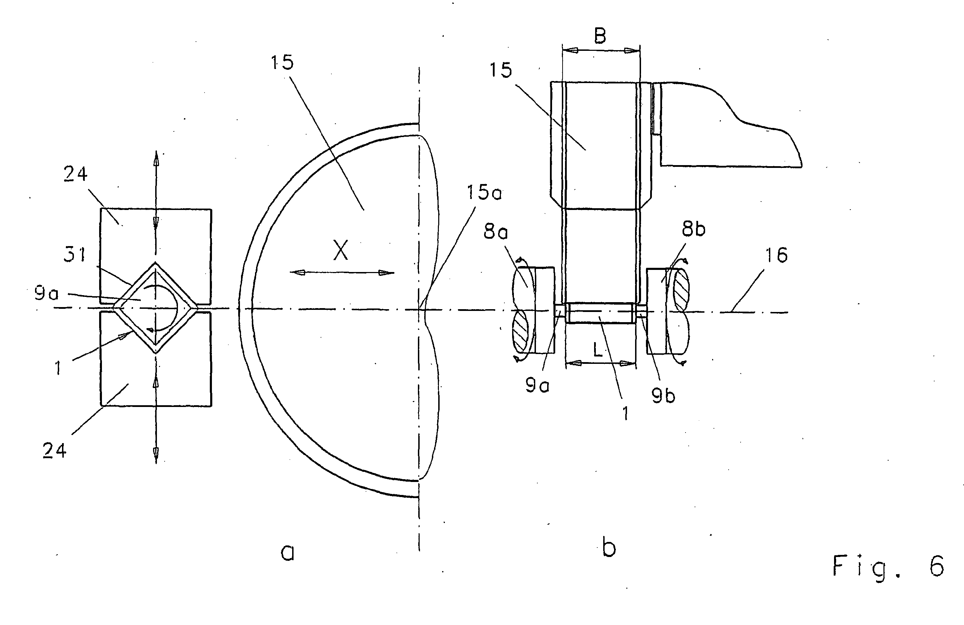

An ihren äußeren Enden tragen die Spannbacken 8a, 8b je einen Reibbelag 9a, 9b, mit dem die Spannbacken 8a, 8b gegen die Stirnseiten 2 des stabförmigen Werkstücks 1. gepresst werden können, um dieses einzuspannen, vergleiche hierzu auch Figur 6b. Die Reibbeläge 9a, 9b der Spannbacken 8a, 8b bestehen aus einem sehr verschleißfesten Material, beispielsweise Hartmetall, dadurch wird ihr Verschleiß vermindert.

Streng senkrecht zu dem Schleiftisch mit der Gleitbahn 5 und zu der seitlichen Verschieberichtung der Werkstückspindelstöcke 7a, 7b und/oder ihrer Spannbacken 8a, 8b ist ein Schleifspindelstock 10 verschiebbar. Der Schleifspindelstock 10 ist zudem um eine lotrechte Achse 11 verschwenkbar. Der Schleifspindelstock 10 trägt zwei Schleifspindein 12 und 13. Die erste Schleifspindel 12 trägt zwei erste Schleifscheiben 14a, 14b, während die zweite Schleifspindel 13 mit der zweiten Schleifscheibe 15 versehen ist. Die Schleifspindeln 12 und 13 treiben die zugehörigen Schleifscheiben 14a, b und 15 zur Drehung um ihre Rotationsachsen 14c und 15a an. Durch Verschwenken des Schleifspindelstocks um 180° können wahlweise die ersten Schleifscheiben 14a, 14b oder die zweite Schleifscheibe 15 in ihre Wirkstellung gebracht werden.

In der üblichen Bezeichnung der Schleiftechnik definiert die Gleitbahn 5 mit der seitlichen Verschieberichtung der Spannstation 6 und der Werkstückspindelstöcke 7a, 7b die Z-Achse. Die gemeinsame Dreh- und Antriebsachse 16 der Spannbacken 8a, 8b bildet die Drehachse C, während die senkrecht zu der Z-Achse und der C-Achse verlaufende Verschieberichtung des Schleifspindelstocks 10 die X-Achse ist.

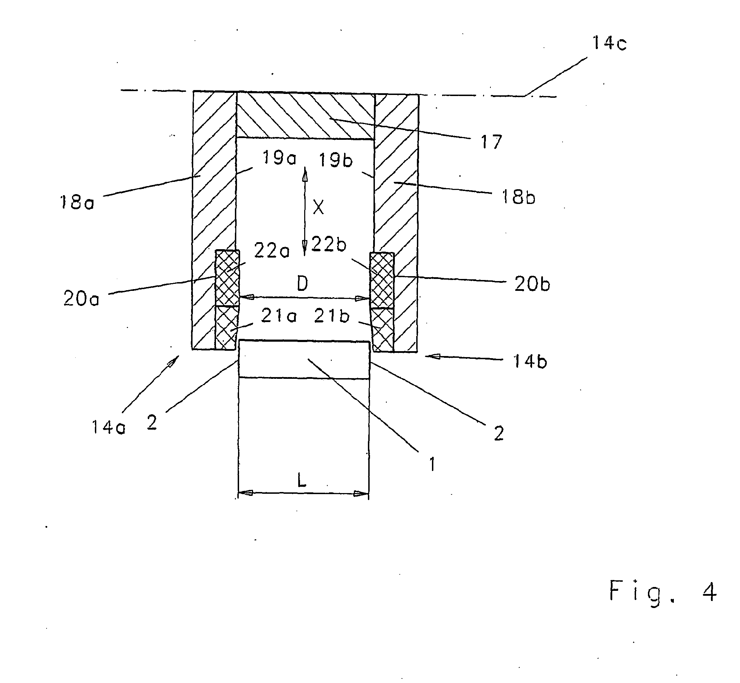

Einzelheiten der in Zwillingsanordnung vorgesehenen ersten Schleifscheiben 14a, 14b gehen aus Figur 4 hervor. Die beiden ersten Schleifscheiben 14a, 14b sind auf der gemeinsamen Rotationsachse 14c der ersten Schleifspindel 12 in einem axialen D Abstand angeordnet, der durch die Distanzscheibe 17 definiert ist. Jede Schleifscheibe 14a, 14b besteht aus einem Grundkörper 18a, 18b. Die beiden einander zugewandten Breitseiten 19a, 19b der Grundkörper 18a, 18b weisen in ihrem äußeren Umfangsbereich je eine Vertiefung 20a, 20b auf, in der sich eine äußere ringförmige Zone 21a, 21 b mit einem Schruppbelag und eine innere ringförmige Zone 22a, 22b mit einem Schlichtbelag befindet. Die beiden Beläge 21a, 21b und 22a, 22b bilden ringförmige Körper innerhalb der Vertiefungen 20a, 20b. Dabei haben die äußeren ringförmigen Zonen 21a, 21 b mit dem Schruppbelag eine sich konisch nach außen erweiternde Form.

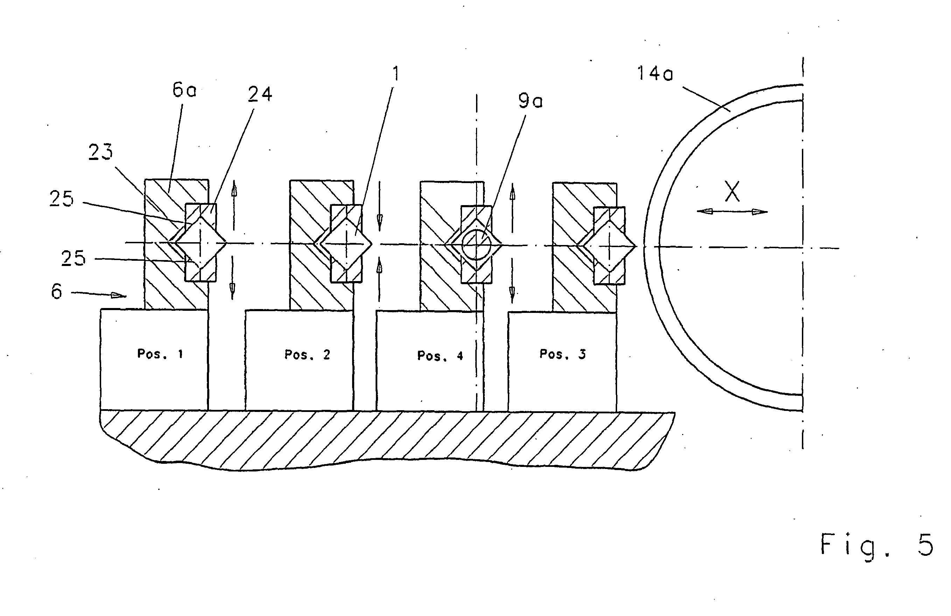

Figur 5 verdeutlicht, dass die schon erwähnte Spannstation 6 nicht nur in Richtung der Z-Achse oder der C-Achse, sondern auch in Richtung der X-Achse verfahrbar ist. In dem Sockelteil 6a sind zwei Beladegreifer 24 diametral angeordnet und gegenläufig zueinander beweglich gesteuert. Mit ihren Greifflächen 24a sind die Beladegreifer 24 an den Querschnitt des stabförmigen Werkstücks 1 angepasst. In der Position 1 der Figur 5 sind die Beladegreifer 24 auseinander gefahren. In Position 2 haben die Beladegreifer 24 das stabförmige Werkstück 1 ergriffen und stellen sich ausgleichend beidseitig gegen dieses an. Diese Art der Halterung hat den Vorteil, dass beim Ergreifen und Einspannen des stabförmigen Werkstücks 1 dessen Längsmitte auch bei unterschiedlichem Schleifmaß der Werkstücke 1 immer in derselben waagerechten Ebene bleibt. Im Gegensatz zu einer starren Werkstückauflage hat somit das Schleifaufmaß 31 (vgl. Fig. 6a) keinen Einfluss auf die Lage der Werkstückmitte. Beim späteren Umfangsschleifen wird das Aufmaß gleichmäßig abgetragen. Wie die Position 3 der Figur 5 zeigt, kann die Spannstation 6 das eingespannte stabförmige Werkstück 1 bis dicht an die ersten Schleifscheiben 14a, 14b heranfahren.

Im Folgenden wird der Ablauf eines Schleifvorganges auf einer Schleifmaschine gemäß Figur 3 im Einzelnen beschrieben.

Der Rohling des stabförmigen Werkstücks 1 wird von einem üblichen Transportsystem an die Spannstation 6 übergeben. Dort wird er, wie schon beschrieben, mittels der Beladegreifer 24 zentrisch eingespannt, vergleiche Position 2 der Figur 5. Die Spannstation 6 fährt danach in die Position 3 bis in den Wirkungsbereich der ersten Schleifscheiben 14a, 14b vor. In dieser ersten, aus Figur 5 ersichtlichen Spannstellung läuft das zeitgleiche Doppelplanschleifen der beiden Stirnseiten 2 an dem stabförmigen Werkstück 1 ab. Hierzu fährt der Schleifspindelstock 10 in Richtung der X-Achse gegen das stabförmige Werkstück 1 vor, vergleiche die Figur 4. Die äußeren ringförmigen Zonen 21 a, 21 b mit dem Schruppbelag schleifen je eine Stirnseite 2 des stabförmigen Werkstücks 1 vor. Sodann überstreichen die inneren ringförmigen Zonen 22a, 22b mit dem Schlichtbelag je eine Stirnseite 2, so dass die Stirnseiten 2 fertig geschliffen sind.

Der Schleifspindelstock 10 kehrt sodann in Richtung der X-Achse in seine Ausgangsstellung zurück, während die Spannstation 6 die Position 4 gemäß der Figur 5 einnimmt. Das stabförmige Werkstück 1 befindet sich dann im Bereich der gemeinsamen Dreh- und Antriebsachse 16 der beiden Spannbacken 8a, 8b.

Die beiden Werkstückspindelstöcke 7a, 7b fahren sodann beidseitig an das stabförmige Werkstück 1 heran, bis die Spannbacken 8a, 8b mit ihren Reibbelägen 9a, 9b das stabförmige Werkstück 1 an seinen Stirnseiten 2 eingespannt haben. Je nach Ausführung der Werkstückspindelstöcke 7a, 7b kann das Einspannen des stabförmigen Werkstücks 1 an seinen Stirnflächen 2 aber auch allein durch die Spannbacken 8a, 8b erfolgen, wenn diese nicht nur rotierend antreibbar, sondern auch axial verfahrbar sind. Danach werden die Beladegreifer 24 der Spannstation 6 auseinandergefahren, und die Spannstation 6 kann zur Aufnahme eines neuen Werkstück-Rohlings in ihre Ausgangsstellung entsprechend der Position 1 in Figur 5 zurückfahren.

Der Vorteil dieser Art des Umspannens besteht darin, dass das Werkstück nicht mehr separat mit einem Beladehandling gegriffen werden muss. Dadurch kann für das Einspannen zwischen den Sparinbacken 8a, 8b eine optimale Genauigkeit erreicht werden; denn es können keine weiteren Positionierfehler durch ein Beladehandling mehr vorkommen.

Inzwischen ist der Schleifspindelstock 10 um seine lotrechte Achse 11 verschwenkt worden, so dass jetzt die zweite Schleifspindel 13 mit der zweiten Schleifscheibe 15 in ihrer Schleifstellung ist, d. h. sich im Bereich des stabförmigen Werkstücks 1 befindet.

Das stabförmige Werkstück 1 wird durch die beiden Spannbacken 8a, 8b nicht nur in seiner zweiten Spannstellung eingespannt, sondern von den beiden Spannbacken 8a, 8b auch gesteuert zur Drehung angetrieben, wobei die gemeinsame Dreh- und Antriebsachse 16 der beiden Spannbacken 8a, 8b die C-Achse des Schleifvorganges bildet. Dieser Vorgang des gesteuerten Umfangsschleifens ist aus Figur 6 ersichtlich dabei zeigt Figur 6a den Schleifvorgang von der Seite. Das stabförmige Werkstück 1 ist zur besseren Deutlichkeit in dem Augenblick dargestellt, in dem beide Spannstellungen wirksam sind. Die beiden Beladegreifer 24 liegen noch an den Längsseiten des stabförmigen Werkstücks 1 an, während zugleich auch die beiden Spannbacken mittels ihrer Reibbeläge das stabförmige Werkstück 1 an dessen Stirnseiten ergreifen. Hiervon ist in Figur 6a der Reibbelag 9a dargestellt. Figur 6a erläutert daher, dass das Einspannen mittels der Beladegreifer 24 zentrisch erfolgt, so dass das Schleifaufmaß 31 keinen Einfluss auf die Lage der Werkstückmitte hat. Natürlich können die Spannbacken 8a, 8b das stabförmige Werkstück 1 erst dann drehen, wenn es sich außerhalb der Beladegreifer 24 befindet, die erste Spannstellung somit aufgehoben ist. Im übrigen zeigt 6a, wie die zweite Schleifscheibe 15 in Richtung der X-Achse an den Umfang des stabförmigen Werkstücks 1 herangefahren und zugestellt wird.

Figur 6b zeigt den Zustand des Umfangsschleifens in der zweiten Spannstellung von oben, wobei die Spannbacken 8a, 8b das stabförmige Werkstück 1 einspannen und zugleich verdrehen. Die gemeinsame Dreh- und Antriebsachse 16 bildet die C-Achse des Schleifvorganges. Die zweite Schleifscheibe 15 überdeckt mit ihrer axialen Breite B die Länge L des stabförmigen Werkstücks 1.

Es erfolgt ein Umfangsschleifen nach dem Prinzip der C-X-Interpolation, wobei jeder Drehstellung des stabförmigen Werkstücks 1 ein bestimmter Abstand zwischen der C-Achse und der Rotationsachse 15a der zweiten Schleifscheibe in Richtung der X-Achse entspricht. Dieser Vorgang ist dem Fachmann im Prinzip von dem bekannten CNC-Unrundschleifen geläufig und braucht hier nicht näher erläutert zu werden. Ersichtlich können nach diesem Prinzip die in Figur 1 dargestellten und ähnliche Querschnitte ausgeführt werden. Die gegenseitige Bewegung von Werkstück 1 und zweiter Schleifscheibe 15 wird dabei durch Verschieben des Schleifspindelstocks 10 in Richtung der X-Achse erzeugt. Das Vor- und Fertigschleifen kann mit einer einzigen zweiten Schleifscheibe 15 erfolgen. Es ist aber auch möglich, auf der zweiten Schleifspindel 13 zwei Schleifscheiben anzuordnen, von denen die eine zum Vor- und die andere zum Fertigschleifen dient.

Die in Figur 2 dargestellten unterschiedlichen Längskonturen lassen sich verwirklichen, indem die Umfangskontur 15a der zweiten Schleifscheibe 15 entsprechend profiliert ist, vgl. Fig. 2d. Insbesondere lassen sich auch stirnseitige Fasen 2a oder Abrundungen 2b an dem stabförmigen Werkstück 1 in einem Konturzug und in derselben Einspannung zeitgleich mit dem Schleifen der Längsseiten 3 anschleifen. Die Umfangskontur 15a der zweiten Schleifscheibe 15 muss hierzu entsprechend geformt sein, vgl. Fig. 2b.

Ersichtlich erfüllt die Spannstation 6 im Zuge der erfindungsgemäßen Verfahrensführung wechselnde Aufgaben. Sie dient zunächst als Transporteinrichtung, die das stabförmige Werkstück 1 bis in den Wirkungsbereich der ersten Schleifscheiben 14a, 14b fördert. Dort dient sie zugleich als Spanneinrichtung, welche die erste Spannstellung des stabförmigen Werkstücks 1 beim Schleifen der Stirnseiten gewährleistet. Danach dient die Spannstation 6 wieder als Fördermittel, welches das stabförmige Werkstück 1 in den Bereich der beiden Spannbacken 8a, 8b entsprechend Position 4 in Figur 5 überführt. Das Einspannen in die zweite Spannstellung zum Durchführen des Umfangsschleifens wird danach von den Spannbacken 8a, 8b übernommen. Die Spannstation 6 hat dann ihre Aufgabe an dem ersten stabförmigen Werkstück 1 erfüllt und fährt zurück in die Position 1 zur Übernahme des nächsten Werkstück-Rohlings.

Das hier beschriebene Umfangsschleifen bietet einen besonderen Vorteil, wenn das stabförmige Werkstück 1 einen in Querrichtung geschichteten Aufbau hat, wie das für manche Anwendungsfälle wertvoll ist z. B. bei Piezo-Aktoren. Es können also abwechselnd Schichten aus unterschiedlichen Werkstoffen vorgesehen sein. Im Gegensatz zum Planlängsschleifen werden beim Umfangsschleifen die Werkstoffe der einzelnen Schichten im Bereich der Seitenflächen nicht miteinander verschmiert.

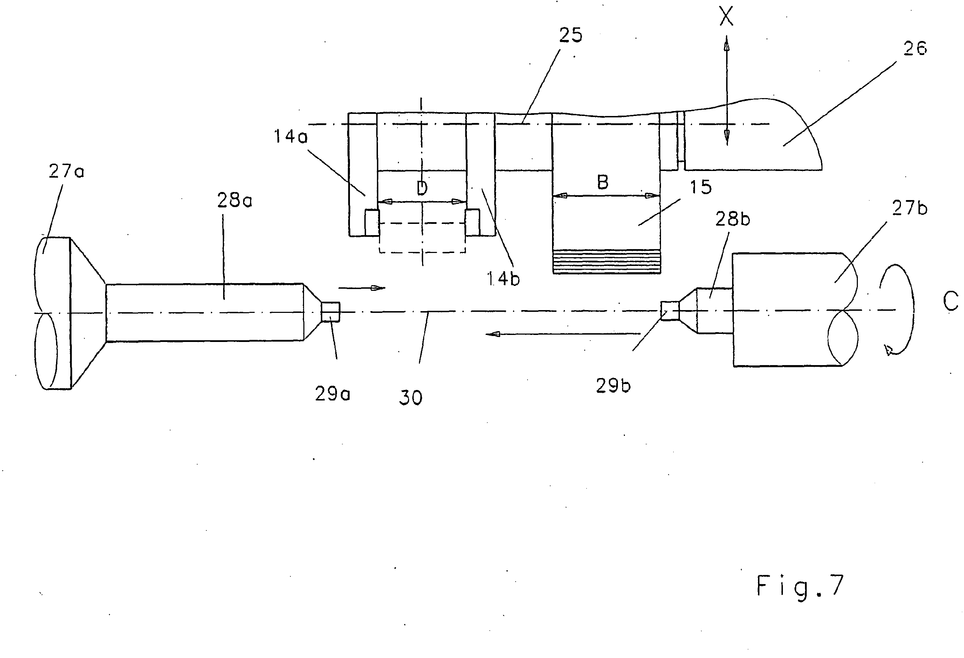

Bei der in Figur 7 dargestellten. Variante einer erfindungsgemäßen Schleifmaschine wird anstelle eines Schleifspindelstockes mit zwei Schleifspindeln ein einziger Schleifscheibensatz vorgesehen, der die ersten Schleifscheiben 14a, 14b und die zweite Schleifscheibe 15 auf einer gemeinsamen Rotationsachse 25 umfasst. Dieser Schleifscheibensatz befindet sich an einer gemeinsamen Schleifspindel 26. Die Werkstückspindelstöcke sind in Figur 7 mit 27a, 27b bezeichnet, die Spannbacken mit 28a, 28b und die Reibbeläge an den Spannbacken mit 29a, 29b. Im Vergleich zu dem ersten Ausführungsbeispiel bleibt der Vorgang des Doppelplanschleifens in der ersten Spannstellung des stabförmigen Werkstücks 1 unverändert. Zum Überführen des Werkstücks 1 in die zweite Spannstellung ist ein gegenseitiges axiales Verfahren der gemeinsamen Schleifspindel 26 und der Schleifspindelstöcke 27a, 27b erforderlich. Es kann aber auch hier genügen, die innerhalb der Werkstückspindelstöcke 27a, 27b beweglichen Spannbacken 28a, 28b axial verfahrbar zu machen.

Der Vorgang des Umfangsschleifens in der zweiten Spannstellung verläuft dann wieder so, wie es zum ersten Ausführungsbeispiel beschrieben worden ist.

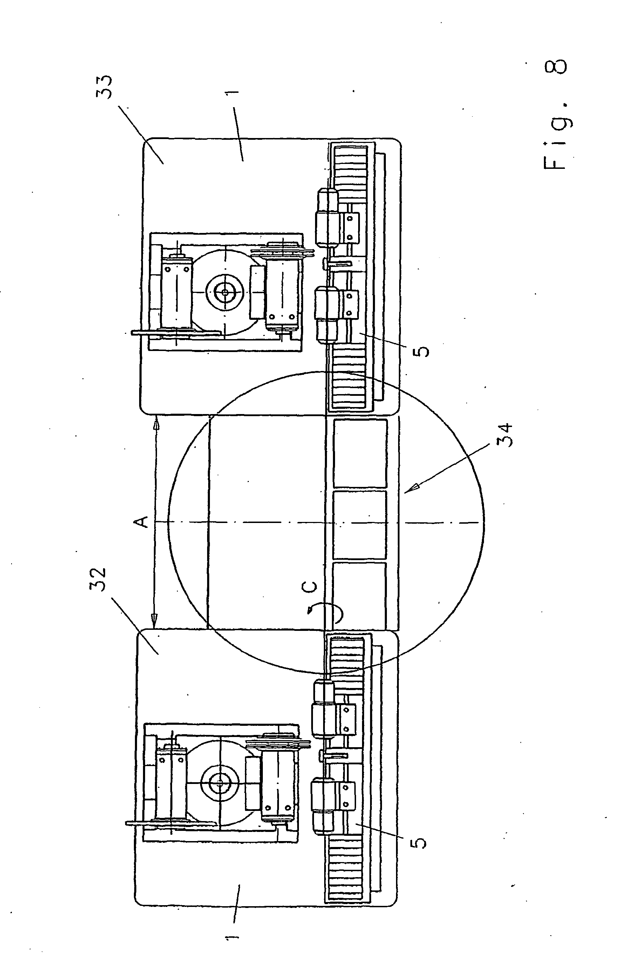

Fig. 8 zeigt den Zusammenbau zweier erfindungsgemäßer Schleifmaschinen 32, 33 zu einer Schleifzelle. Die beiden Schleifmaschinen 32, 33 werden unter Einhalten eines Abstandes A nebeneinander in Zwillingsanordnung in der Weise aufgestellt, dass die Richtung ihrer Schleiftische mit den Gleitbahnen 5 und ihrer C-Achsen identisch ist. Zwischen den beiden Schleifmaschinen 32, 33 ist eine gemeinsame Ladezelle 34 untergebracht, die beide Schleifmaschinen mit den Rohlingen des stabförmigen Werkstücks 1 versorgt. Investitionsaufwand und Flächenbedarf werden dadurch weiter verringert, und es bleibt der Vorteil der Bedienung allein von der Vorderseite erhalten.

### Bezugszeichen

- 1: stabförmiges Werkstück
- 2: Stirnseite
- 2a: Stirnfase
- 2b: stirnseitige Abrundung
- 3: Längsseite
- 4: Maschinenbett
- 5: Gleitbahn
- 6: Spannstation
- 6a: Sockelteil
- 7a, b: Werkstückspindelstock
- 8a, b: Spannbacken
- 9a, b: Reibbelag
- 10: Schleifspindelstock
- 11: lotrechte Achse
- 12: erste Schleifspindel
- 13: zweite Schleifspindel
- 14a, b: erste Schleifscheiben
- 14c: Rotationsachse der ersten Schleifscheiben
- 15: zweite Schleifscheibe
- 15a: Rotationsachse der zweiten Schleifscheibe
- 15b: Umfangskontur der zweiten Schleifscheibe
- 16: gemeinsame Dreh- und Antriebsachse
- 17: Distanzscheibe
- 18a, b: Grundkörper
- 19a,: b Breitseite
- 20a, b: Vertiefung
- 21a, b: äußere ringförmige Zone
- 22a, b: innere ringförmige Zone
- 23: Sockelteil der Spannstation 6
- 24: Beladegreifer
- 24a: Greiffläche
- 25: gemeinsame Rotationsachse
- 26: gemeinsame Schleifspindel
- 27a, b: Werkstückspindelstock
- 28a, b: Spannbacken
- 29a, b: Reibbelag
- 30: gemeinsame Dreh- und Antriebsachse
- 31: Schleifaufmaß
- 32: Schleifmaschine
- 33: Schleifmaschine
- 34: gemeinsame Ladezelle
- A: Abstand zwischen zwei Schleifmaschinen
- B: axiale Breite der zweiten Schleifscheibe
- C: Rotationsachse des stabförmigen Werkstücks beim Umfangsschleifen
- D: Abstand der ersten Schleifscheiben voneinander
- L: Länge des stabförmigen Werkstücks
- X: Achsrichtung der Zustellbewegung senkrecht zur Längsachse des stabförmigen Werkstücks

## Patentansprüche

1. Verfahren zum Schleifen von stabförmigen Werkstücken (1),
die einen unrunden, durch ebene und/oder gekrümmte Linien gebildeten Querschnitt und ebene, parallel zueinander verlaufende Stirnseiten (2) aufweisen, mit den folgenden Verfahrensschritten:
a) das stabförmige Werkstück (1) wird in einer ersten Spannstellung an seinen Längsseiten (3) eingespannt;
b) die beiden Stirnseiten (2) des stabförmigen Werkstücks (1) werden zeitgleich durch Doppelplanschleifen fertiggeschliffen;
c) das eingespannte stabförmige Werkstück (1) wird zwischen zwei gleichachsig im Abstand voneinander befindliche Spannbacken (8a, 8b; 28a, 28b) überführt und von diesen in einer zweiten Spannstellung an seinen Stirnseiten (2) eingespannt, wonach die erste Spannstellung an den Längsseiten (3) aufgehoben wird;
d) die Spannbacken (8a, 8b; 28a, 28b) werden synchron gesteuert zur Drehung angetrieben, und die Längsseiten (3) des stabförmigen Werkstücks (1) werden durch CNC-gesteuertes Umfangsschleifen nach dem Prinzip der C-X-Interpolation vor- und fertiggeschliffen, wobei die C-Achse durch die gemeinsame Dreh- und Antriebsachse (16; 30) der beiden Spannbacken (8a, 8b; 28a, 28b) gebildet wird und die X-Achse senkrecht zu der C-Achse verläuft;
e) zum Lösen der zweiten Spannstellung werden die Spannbacken (8a, 8b; 28a, 28b) auseinander gefahren und das stabförmige Werkstück (1) an eine Entladeeinrichtung übergeben.

2. Verfahren nach Anspruch 1, mit den folgenden Verfahrensschritten:
a) zum Doppelplanschleifen seiner Stirnseiten (2) wird das stabförmige Werkstück (1) in seiner ersten Spannstellung zwei rotierenden, gleichachsig im axialen Abstand D voneinander befindlichen ersten Schleifscheiben (14a, 14b) zugeführt, wobei die Längsrichtung des stabförmigen Werkstücks (1) parallel zu der gemeinsamen Rotationsachse (14c ; 25) der ersten Schleifscheiben (14a, 14b) verläuft;
b) das Planschleifen erfolgt durch gegenseitige Bewegung des stabförmigen Werkstücks (1) und der ersten Schleifscheiben (14a, 14b) in Richtung der X-Achse;
c) bei der gegenseitigen Bewegung durchlaufen die beiden Stirnseiten (2) des stabförmigen Werkstücks (1) schleifwirksam nacheinander an den einander zugekehrten Breitseiten (19a, 19b) der ersten Schleifscheiben (14a, 14b) angeordnete äußere ringförmige Zonen (21a, 21b) mit einem Schruppbelag und sodann daran anschließende innere ringförmige Zonen (22a, 22b) mit einem Schlichtbelag.

3. Verfahren nach Anspruch 2,
bei dem die Längsseiten (3) des stabförmigen Werkstücks (1) in seiner zweiten Spannstellung durch mindestens eine rotierende zweite Schleifscheibe (15) geschliffen werden, deren Rotationsachse (15a) parallel zu der gemeinsamen Dreh- und Antriebsachse (16) der beiden Spannbacken (8a, 8b) verläuft, wobei die ersten und zweiten Schleifscheiben (14a, 14b,15) **dadurch** in ihre Schleifstellung gebracht und wieder daraus entfernt werden, dass ein gemeinsamer Schleifspindelstock (13) verschwenkt wird, an dem die ersten und zweiten Schleifscheiben (14a, 14b, 15) mit parallel zueinander verlaufenden Rotationsachsen (14c, 15a) angeordnet sind.

4. Verfahren nach Anspruch 2,
bei dem die Längsseiten (3) des stabförmigen Werkstücks (1) in seiner zweiten Spannstellung durch mindestens eine rotierende zweite Schleifscheibe (15) geschliffen werden, die mit den ersten Schleifscheiben (14a, 14b) eine gemeinsame Rotationsachse (25) hat, wobei das stabförmige Werkstück (1) aus seiner Schleifstellung an den ersten Schleifscheiben (14a, 14b) mit den folgenden Verfahrensschritten in die Schleifstellung an der zweiten Schleifscheibe (15) überführt wird:
a) das in seiner ersten Spannstellung befindliche stabförmige Werkstück (1) wird in Richtung der X-Achse aus dem Bereich der ersten Schleifscheiben (14a, 14b) nach außen geführt;
b) es wechselt aus der ersten Spannstellung in die zweite Spannstellung;
c) das in der zweiten Spannstellung befindliche stabförmige Werkstück und die auf der gemeinsamen Rotationsachse (25) befindlichen ersten und zweiten Schleifscheiben (14a, 14b, 15) werden relativ zueinander parallel verschoben,
d) bis sich das stabförmige Werkstück im Wirkungsbereich der zweiten Schleifscheibe (15) befindet.

5. Verfahren nach einem der Ansprüche 1 bis 4,
bei dem das stabförmige Werkstück in seiner ersten Spannstellung von mindestens zwei an einer beweglichen Spannstation (6) befindlichen Beladegreifern (24) ergriffen wird, die an den Querschnitt des stabförmigen Werkstücks (1) angepasst sind und sich einander gegenüberliegend ausgleichend an die Längsseiten (3) des stabförmigen Werkstücks (1) anlegen.

6. Verfahren nach Anspruch 5,
bei dem die Spannstation (6) in den Richtungen der X-Achse und der C-Achse gesteuert beweglich ist.

7. Verfahren nach Anspruch 5 oder 6,
bei dem die ausgleichenden Beladegreifer (24) auch zur Ermittlung des Schleifaufmaßes (31) dienen, das für den Ablauf des Umfangsschleifens in der zweiten Spannstellung maßgeblich ist.

8. Schleifmaschine zum Schleifen von stabförmigen Werkstücken (1),
die einen unrunden, durch ebene und/oder gekrümmte Linien gebildeten Querschnitt und ebene, parallel zueinander verlaufende Stirnseiten (2) aufweisen, zur Durchführung des Verfahrens nach einem der Ansprüche 3 sowie 5 bis 7, mit den folgenden Merkmalen:
a) auf einem Maschinenbett (4) ist eine Gleitbahn (5) ausgebildet, auf der zwei Werkstückspindelstöcke (7a, 7b) einzeln oder gemeinsam verschiebbar und feststellbar angeordnet sind;
b) in den Werkstückspindelstöcken (7a, 7b) sind Spannbacken (8a, 8b) gelagert, deren Spannflächen einander zugewandt sind;
c) jeder Werkstückspindelstock (7a, 7b) weist einen elektromotorischen Drehantrieb für die an ihm befindliche Spannbacke (8a, 8b) auf, wobei die Dreh- und Antriebsachse (16) für beide Spannbacken (8a, 8b) geometrisch identisch ist und die C-Achse eines Schleifvorganges bildet ;
d) es ist eine Steuereinrichtung vorgesehen, die es ermöglicht, die beiden Spannbacken (8a, 8b) in eine synchrone, phasengleiche Drehbewegung zu versetzen, die es weiter ermöglicht, durch Zusammenfahren der Spannbacken (8a, 8b) gegen die Stirnseiten (2) des stabförmigen Werkstücks (1) dieses zwischen sich einzuspannen;
e) auf dem Maschinenbett (4) ist um eine lotrechte Achse (11) schwenkbar und in einer Richtung senkrecht zu der C-Achse gesteuert verschiebbar ein Schleifspindelstock (10) angeordnet, wobei dessen Verschieberichtung die X-Achse eines Schleifvorganges definiert;
f) der Schleifspindelstock (10) trägt eine erste (12) und eine zweite Schleifspindel (13), die durch Verschwenken des Schleifspindelstocks (10) um die lotrechte Achse (11) wahlweise in ihre Schleifstellung gebracht werden;
g) an der ersten Schleifspindel (12) sind mit gemeinsamer Rotationsachse (14c) zwei erste Schleifscheiben (14a, 14b) gelagert, deren Abstand D voneinander der Länge L des stabförmigen Werkstücks (1) entspricht;
h) an der zweiten Schleifspindel (13) ist mindestens eine zweite Schleifscheibe (15) angeordnet, deren axiale Breite B die Länge L des stabförmigen Werkstücks (1) überdeckt;
i) auf der Gleitbahn (5) ist zwischen den Werkstückspindelstöcken (7a, 7b) eine Spannstation (6) angeordnet, die mit einem Sockelteil (6a) in der Richtung der X-Achse gesteuert verschiebbar ist und an dem Sockelteil (6b) befindliche, selbst zentrierende Beladegreifer (24) aufweist;
k) die Spannstation (6) ist dazu ausgebildet, das stabförmige Werkstück (1) an seinen Längsseiten (3) einzuspannen (erste Spannstellung) und dieses mit parallel zur C-Achse verlaufender Längsrichtung aus einer Beladeposition in eine Schleifposition zum Planschleifen seiner frei liegenden Stirnseiten (2) durch die einander zugewandten Breitseiten der ersten Schleifscheiben (14a, 14b) und von dort zu einer Übergabeposition im Bereich der Spannbacken (8a, 8b) zu verschieben, von denen es stirnseitig einspannend übernommen werden kann (zweite Spannstellung);
l) die Steuereinrichtung ist dazu eingerichtet, bei in der Schleifstellung befindlicher zweiter Schleifscheibe (15), deren Rotationsachse (15a) parallel zur C-Achse verläuft, ein CNC-gesteuertes Umfangsschleifen nach dem Prinzip der C-X-Interpolation durchzuführen.

9. Schleifmaschine zum Schleifen von stabförmigen Werkstücken (1), die einen unrunden, durch ebene und/oder gekrümmte Linien gebildeten Querschnitt und ebene, parallel zueinander verlaufende Stirnseiten (2) aufweisen, zur Durchführung des Verfahrens nach einem der Ansprüche 4 bis 7, mit den folgenden Merkmalen:
a) auf einem Maschinenbett (4) ist eine Gleitbahn (5) ausgebildet, auf der zwei Werkstückspindelstöcke (7a, 7b) einzeln oder gemeinsam verschiebbar und feststellbar angeordnet sind;
b) in den Werkstückspindelstöcken (7a, 7b) sind Spannbacken (8a, 8b) gelagert, deren Spannflächen einander zugewandt sind;
c) jeder Werkstückspindelstock (7a, 7b) weist einen elektromotorischen Drehantrieb für die an ihm befindliche Spannbacke (8a, 8b) auf, wobei die Dreh- und Antriebsachse (16) für beide Spannbacken (8a, 8b) geometrisch identisch ist und die C-Achse eines Schleifvorganges bildet ;
d) es ist eine Steuereinrichtung vorgesehen, die es ermöglicht, die beiden Spannbacken (8a, 8b) in eine synchrone phasengleiche Drehbewegung zu versetzen, und die es weiter ermöglicht, durch Zusammenfahren der Spannbacken (8a, 8b) gegen die Stirnseiten (2) des stabförmigen Werkstücks (1) dieses zwischen sich einzuspannen;
e) auf dem Maschinenbett (4) ist in einer Richtung senkrecht zu der C-Achse gesteuert verschiebbar eine Schleifspindel (26) mit einem Schleifscheibensatz angeordnet, wobei die Verschieberichtung der Schleifspindel (26) die X-Achse der Schleifvorgänge definiert;
f) der Schleifscheibensatz umfasst zwei erste Schleifscheiben (14a, 14b), deren axialer Abstand D voneinander der Länge L des stabförmigen Werkstücks (1) entspricht, und eine zweite Schleifscheibe (15), deren axiale Breite B die Länge L des stabförmigen Werkstückes (1) überdeckt;
g) sämtliche Schleifscheiben (14a, 14b, 15) sind auf einer gemeinsamen Rotationsachse (25) gelagert;
h) auf der Gleitbahn (5) ist zwischen den Werkstückspindelstöcken (7a, 7b) eine Spannstation (6) angeordnet, die mit einem Sockelteil (6a) in der Richtung der X-Achse und in der Richtung der C-Achse gesteuert verschiebbar ist und an dem Sockelteil (6b) befindliche, selbst zentrierende Beladegreifer (24) aufweist;
i) die Spannstation (6) ist dazu ausgebildet, das stabförmige Werkstück (1) an seinen Längsseiten (3) einzuspannen (erste Spannstellung) und dieses mit parallel zur C-Achse verlaufender Längsrichtung aus einer Beladeposition in eine Schleifposition zum Planschleifen seiner frei liegenden Stirnseiten (2) durch die einander zugewandten Breitseiten der ersten Schleifscheiben (14a, 14b) und von dort zu einer Übergabeposition im Bereich der Spannbacken (8a, 8b) zu verschieben, von denen es stirnseitig einspannend übernommen werden kann (zweite Spannstellung);
k) die Steuereinrichtung ist dazu eingerichtet, bei in der Schleifstellung befindlicher zweiter Schleifscheibe (15), deren Rotationsachse (15a) parallel zur C-Achse verläuft, ein CNC-gesteuertes Umfangsschleifen nach dem Prinzip der C-X-Interpolation durchzuführen.

10. Schleifmaschine nach Anspruch 8 oder 9, bei der die Umfangskontur (15b) der die Länge L des stabförmigen Werkstücks (1) überdeckenden zweiten Schleifscheibe (15) abweichend von der Zylinderform gestaltet ist und der Längskontur des fertig geschliffenen stabförmigen Werkstücks (1) entspricht.

11. Schleifmaschine nach Anspruch 10, bei der die Umfangskontur (15b) der zweiten Schleifscheibe (15) auch entsprechend der Form einer stirnseitigen Fase (2a) oder stirnseitigen Abrundung (2b) geformt ist, die an dem stabförmigen Werkstück (1) angeschliffen werden soll.

12. Schleifmaschine nach Anspruch 8 bis 11, bei der die Spannbacken (8a, 8b; 28a, 28b) mit einem Reibbelag (9a, 9b; 29a, 29b) zur Anlage an die Stirnseiten (2) des stabförmigen Werkstücks (1) versehen sind.

13. Schleifmaschine nach Anspruch 8 bis 12, bei der die beiden einander zugewandten Breitseiten der ersten Schleifscheiben (14a, 14b) in ihrem äußeren Umfangsbereich je eine äußere ringförmige Zone (21a, 21b) mit einem Schruppbelag und eine innere ringförmige Zone (22a, 22b) mit einem Schlichtbelag aufweisen, wobei der axiale Abstand der beiden äußeren ringförmigen Zonen voneinander (21a, 21 b) sich nach außen hin vergrößert.

14. Schleifmaschine nach Anspruch 8 bis 14, bei der an dem Sockelteil (6a) der Spannstation (6) mindestens zwei Beladegreifer (24) diametral angeordnet und die Greifflächen (24a) der Beladegreifer (24) an den Querschnitt des stabförmigen Werkstücks (1) angepasst sind.

15. Schleifzelle, bei der zwei Schleifmaschinen (32, 33) nach Anspruch 8 bis 14 derart nebeneinander angeordnet sind, dass ihre Bedienungsseiten benachbart oder einander zugewandt liegen und im Zwischenraum zwischen den beiden Schleifmaschinen (32, 33) eine gemeinsame Ladezelle (34) angeordnet ist.

## Claims

1. Method of grinding bar-shaped workpieces (1) which have a non-circular cross section, formed by flat and/or curved lines, and flat end faces (2) running parallel to one another, comprising the following method steps:
a) the bar-shaped workpiece (1) is clamped in a first clamping position at its longitudinal sides (3);
b) the two end faces (2) of the bar-shaped workpiece (1) are simultaneously finish-ground by double face grinding;
c) the clamped bar-shaped workpiece (1) is transferred between clamping jaws (8a, 8b; 28a, 28b) located coaxially at a distance from one another and is clamped by said clamping jaws (8a, 8b; 28a, 28b) in a second clamping position at its end faces (2), whereupon the first clamping position at the longitudinal sides (3) is released;
d) the clamping jaws (8a, 8b; 28a, 28b) are rotationally driven in a synchronously controlled manner, and the longitudinal sides (3) of the bar-shaped workpiece (1) are rough- and finish-ground by CNC circumferential grinding according to the principle of C-X interpolation, wherein the C axis is formed by the common rotation and drive axis (16 ; 30) of the two clamping jaws (8a, 8b; 28a, 28b) and the X axis runs perpendicularly to the C axis;
e) to release the second clamping position, the clamping jaws (8a, 8b; 28a, 28b) are moved apart and the bar-shaped workpiece (1) is delivered to a loading device.

2. Method according to Claim 1, comprising the following method steps:
a) for the double face grinding of its end faces (2), the bar-shaped workpiece (1) is fed in its first clamping position to two rotating first grinding wheels (14a, 14b) located coaxially at an axial distance D from one another, wherein the longitudinal direction of the bar-shaped workpiece (1) runs parallel to the common rotation axis (14c; 25) of the first grinding wheels (14a, 14b) ;
b) the face grinding is effected by mutual movement of the bar-shaped workpiece (1) and of the first grinding wheels (14a, 14b) in the direction of the X axis;
c) during the mutual movement, the two end faces (2) of the bar-shaped workpiece (1), with effective grinding taking place, successively pass through outer annular zones (21a, 21b) arranged on the wide sides (19a, 19b), facing one another, of the first grinding wheels (14a, 14b) and having a rough grinding layer and then through adjoining inner annular zones (22a, 22b) having a finish grinding layer.

3. Method according to Claim 2, in which the longitudinal sides (3) of the bar-shaped workpiece (1) are ground in its second clamping position by at least one rotating second grinding wheel (15), the rotation axis (15a) of which runs parallel to the common rotation and drive axis (16) of the two clamping jaws (8a, 8b), wherein the first and the second grinding wheels (14a, 14b, 15) are brought into their grinding position and removed again therefrom by a common grinding headstock (13) being pivoted, on which the first and the second grinding wheels (14a, 14b, 15) with rotation axes (14c, 15a) which run parallel to one another are arranged.

4. Method according to Claim 2, in which the longitudinal sides (3) of the bar-shaped workpiece (1) are ground in its second clamping position by at least one rotating second grinding wheel (15) which has a common rotation axis (25) with the first grinding wheels (14a, 14b), wherein the bar-shaped workpiece (1) is transferred from its grinding position at the first grinding wheels (14a, 14b) into the grinding position at the second grinding wheel (15) by the following method steps:
a) the bar-shaped workpiece (1) located in its first clamping position is directed outwards from the region of the first grinding wheels (14a, 14b) in the direction of the X axis;
b) it changes from the first clamping position to the second clamping position;
c) the bar-shaped workpiece located in the second clamping position and the first and the second grinding wheels (14a, 14b, 15) located on the common rotation axis (25) are displaced in parallel relative to one another;
d) until the bar-shaped workpiece is located in the effective region of the second grinding wheel (15).

5. Method according to one of Claims 1 to 4, in which the bar-shaped workpiece is gripped in its first clamping position by at least two loading grippers (24) which are located on a movable clamping station (6) and which are adapted to the cross section of the bar-shaped workpiece (1) and opposite one another adjust in an equalizing manner against the longitudinal sides (3) of the bar-shaped workpiece (1).

6. Method according to Claim 5, in which the clamping station (6) is movable in a controlled manner in the directions of the X axis and the C axis.

7. Method according to Claim 5 or 6, in which the equalizing loading grippers (24) also serve to determine the grinding allowance (31) which is decisive for the sequence of the circumferential grinding in the second clamping position.

8. Grinding machine for grinding bar-shaped workpieces (1), which have a non-circular cross section, formed by flat and/or curved lines, and flat end faces (2) running parallel to one another, for carrying out the method according to one of Claims 3 and 5 to 7, comprising the following features:
a) formed on a machine bed (4) is a slideway (5) on which two work headstocks (7a, 7b) are individually or jointly displaceable and are arranged in a fixable manner;
b) mounted in the work headstocks (7a, 7b) are clamping jaws (8a, 8b), the clamping surfaces of which face one another;
c) each work headstock (7a, 7b) has an electric-motor-driven rotary drive for the clamping jaw (8a, 8b) located thereon, wherein the rotation and drive axis (16) is geometrically identical for both clamping jaws (8a, 8b) and forms the C axis of a grinding operation;
d) a control device is provided which enables the two clamping jaws (8a, 8b) to be set in a synchronous, in phase rotary movement which furthermore enables the bar-shaped workpiece (1) to be clamped between the clamping jaws (8a, 8b) by moving the latter together against the end faces (2) of the bar-shaped workpiece (1) ;
e) a grinding headstock (10) is arranged on the machine bed (4) in such a way as to be able to be swivelled about a vertical axis (11) and displaceable in a controlled manner in a direction perpendicular to the C axis, wherein the displacement direction of said grinding headstock (10) defines the X axis of a grinding operation;
f) the grinding headstock (10) carries a first (12) and a second grinding spindle (13) which are optionally brought into their grinding position by swivelling the grinding headstock (10) about the vertical axis (11);
g) two first grinding wheels (14a, 14b) are mounted with a common rotation axis (14c) on the first grinding spindle (12), the distance D between said grinding wheels (14a, 14b) corresponding to the length L of the bar-shaped workpiece (1);
h) at least one second grinding wheel (15) is arranged on the second grinding spindle (13), the axial width B of said grinding wheel (15) covering the length L of the bar-shaped workpiece (1);
i) arranged on the slideway (5) between the work headstocks (7a, 7b) is a clamping station (6) which is displaceable with a pedestal part (6a) in a controlled manner in the direction of the X axis and has self-centring loading grippers (24) located on the pedestal part (6a) ;
k) the clamping station (6) is designed for clamping the bar-shaped workpiece (1) at its longitudinal sides (3) (first clamping position) and for displacing said bar-shaped workpiece (1), with a longitudinal direction running parallel to the C axis, from a loading position into a grinding position for the face grinding of its exposed end faces (2) by the wide sides, facing one another, of the first grinding wheels (14a, 14b) and from there to a transfer position in the region of the clamping jaws (8a, 8b), from which it can be received at the end faces in a clamping manner (second clamping position) ;
l) the control device is set up for carrying out CNC circumferential grinding according to the principle of C-X interpolation when the second grinding wheel (15), the rotation axis (15a) of which runs parallel to the C axis, is in the grinding position.

9. Grinding machine for grinding bar-shaped workpieces (1), which have a non-circular cross section, formed by flat and/or curved lines, and flat end faces (2) running parallel to one another, for carrying out the method according to one of Claims 4 to 7, comprising the following features:
a) formed on a machine bed (4) is a slideway (5) on which two work headstocks (7a, 7b) are individually or jointly displaceable and are arranged in a fixable manner;
b) mounted in the work headstocks (7a, 7b) are clamping jaws (8a, 8b), the clamping surfaces of which face one another;
c) each work headstock (7a, 7b) has an electric-motor-driven rotary drive for the clamping jaw (8a, 8b) located thereon, wherein the rotation and drive axis (16) is geometrically identical for both clamping jaws (8a, 8b) and forms the C axis of a grinding operation;
d) a control device is provided which enables the two clamping jaws (8a, 8b) to be set in a synchronous, in phase rotary movement which furthermore enables the bar-shaped workpiece (1) to be clamped between the clamping jaws (8a, 8b) by moving the latter together against the end faces (2) of the bar-shaped workpiece (1) ;
e) a grinding spindle (26) having a grinding wheel set is arranged on the machine bed (4) in such a way as to be displaceable in a controlled manner in a direction perpendicular to the C axis, wherein the displacement direction of the grinding spindle (26) defines the X axis of the grinding operations;
f) the grinding wheel set comprises two first grinding wheels (14a, 14b), the axial distance D of which corresponds to the length L of the bar-shaped workpiece (1), and a second grinding wheel (15), the axial width B of which covers the length L of the bar-shaped workpiece (1);
g) all the grinding wheels (14a, 14b, 15) are mounted on a common rotation axis (25);
h) arranged on the slideway (5) between the work headstocks (7a, 7b) is a clamping station (6) which is displaceable with a pedestal part (6a) in a controlled manner in the direction of the X axis and in the direction of the C axis and has self-centring loading grippers (24) located on the pedestal part (6a);
i) the clamping station (6) is designed for clamping the bar-shaped workpiece (1) at its longitudinal sides (3) (first clamping position) and for displacing said bar-shaped workpiece (1), with a longitudinal direction running parallel to the C axis, from a loading position into a grinding position for the face grinding of its exposed end faces (2) by the wide sides, facing one another, of the first grinding wheels (14a, 14b) and from there to a transfer position in the region of the clamping jaws (8a, 8b), from which it can be received at the end faces in a clamping manner (second clamping position) ;
k) the control device is set up for carrying out CNC circumferential grinding according to the principle of C-X interpolation when the second grinding wheel (15), the rotation axis (15a) of which runs parallel to the C axis, is in the grinding position.

10. Grinding machine according to Claim 8 or 9, in which the circumferential contour (15b) of the second grinding wheel (15) covering the length L of the bar-shaped workpiece (1) is designed to differ from the cylindrical shape and corresponds to the longitudinal contour of the finish-ground bar-shaped workpiece (1).

11. Grinding machine according to Claim 10, in which the circumferential contour (15b) of the second grinding wheel (15) is also shaped in accordance with the shape of an end-face chamfer (2a) or end-face rounding (2b) which is to be ground on the bar-shaped workpiece (1).

12. Grinding machine according to Claims 8 to 11, in which the clamping jaws (8a, 8b; 28a, 28b) are provided with a friction lining (9a, 9b; 29a, 29b) for engaging against the end faces (2) of the bar-shaped workpiece (1).

13. Grinding machine according to Claims 8 to 12, in which the two wide sides, facing one another, of the first grinding wheels (14a, 14b) each have in their outer circumferential region an outer annular zone (21a, 21b) with a rough grinding layer and an inner annular zone (22a, 22b) with a finish grinding layer, wherein the axial distance between the two outer annular zones (21a, 21b) increases outwards.

14. Grinding machine according to Claims 8 to 14, in which at least two loading grippers (24) are arranged diametrically on the pedestal part (6a) of the clamping station (6) and the gripping surfaces (24a) of the loading grippers (24) are adapted to the cross section of the bar-shaped workpiece (1).

15. Grinding cell, in which two grinding machines (32, 33) according to Claims 8 to 14 are arranged next to one another in such a way that their operating sides are contiguous or lie so as to face one another and a common loading cell (34) is arranged in the space between the two grinding machines (32, 33).

## Revendications

1. Procédé de meulage de pièces en forme de barreau (1), qui présentent une section transversale non circulaire, formée par des lignes planes et/ou courbes et des faces frontales planes (2) orientées parallèlement l'une à l'autre, comprenant les étapes suivantes:
a) on serre la pièce en forme de barreau (1) sur ses deux faces longitudinales (3) dans une première position de serrage;
b) on rectifie les deux faces frontales (2) de la pièce en forme de barreau (1) simultanément par meulage plan double;
c) on transfère la pièce en forme de barreau serrée (1) entre deux mâchoires de serrage (8a, 8b; 28a, 28b) se trouvant à distance l'une de l'autre sur le même axe et on la serre au moyen de celles-ci sur ses deux faces frontales (2) dans une deuxième position de serrage, puis on supprime la position de serrage sur les faces longitudinales (3);
d) on entraîne les mâchoires de serrage (8a, 8b; 28a, 28b) en rotation par une commande synchronisée, et on effectue un meulage d'ébauchage et de finition sur les faces longitudinales (3) de la pièce en forme de barreau (1) par meulage périphérique à commande CNC selon le principe de l'interpolation C-X, pour lequel l'axe C est formé par l'axe de rotation et d'entraînement commun (16; 30) des deux mâchoires de serrage (8a, 8b; 28a, 28b) et l'axe X est orienté perpendiculairement à l'axe C;
e) on écarte l'une de l'autre les mâchoires de serrage (8a, 8b; 28a, 28b) pour libérer la deuxième position de serrage et on transfère la pièce en forme de barreau (1) à un dispositif de déchargement.

2. Procédé selon la revendication 1, comprenant les étapes suivantes:
a) Pour le meulage plan double de ses faces frontales (2), on place la pièce en forme de barreau (1) dans sa première position de serrage entre deux premières meules tournantes (14a, 14b) se trouvant à la distance axiale D l'une de l'autre sur le même axe, dans laquelle la direction longitudinale de la pièce en forme de barreau (1) est orientée parallèlement à l'axe de rotation commun (14c; 25) des premières meules (14a, 14b);
b) on effectue le meulage plan par un mouvement mutuel de la pièce en forme de barreau (1) et des premières meules (14a, 14b) dans la direction de l'axe X ;
c) lors du mouvement mutuel, les deux faces frontales (2) de la pièce en forme de barreau (1) parcourent, en meulage effectif, des zones annulaires extérieures (21a, 21b) avec une garniture de dégrossissage et ensuite des zones annulaires intérieures (22a, 22b) avec une garniture de finition, disposées les unes après les autres sur les faces larges (19a, 19b) tournées l'une vers l'autre des premières meules (14a, 14b).

3. Procédé selon la revendication 2, dans lequel on meule les faces longitudinales (3) de la pièce en forme de barreau (1) dans sa deuxième position de serrage au moyen d'au moins une deuxième meule tournante (15), dont l'axe de rotation (15a) est orienté parallèlement à l'axe de rotation et d'entraînement commun (16) des deux mâchoires de serrage (8a, 8b), dans lequel on place les premières et les deuxièmes meules (14a, 14b, 15) dans leur position de meulage et on les en écarte de nouveau, de façon à faire pivoter une poupée porte-meule commune (13), sur laquelle les premières et les deuxièmes meules (14a, 14b, 15) sont disposées avec des axes de rotation (14c, 15a) orientés parallèlement l'un à l'autre.

4. Procédé selon la revendication 2, dans lequel on meule les faces longitudinales (3) de la pièce en forme de barreau (1) dans sa deuxième position de serrage au moyen d'au moins une deuxième meule tournante (15), qui possède un axe de rotation commun (25) avec les premières meules (14a, 14b), dans lequel on transfère la pièce en forme de barreau (1) de sa position de meulage sur les premières meules (14a, 14b) à sa position de meulage sur la deuxième meule (15) avec les étapes suivantes:
a) on guide la pièce en forme de barreau (1) se trouvant dans sa première position de serrage dans la direction de l'axe X vers l'extérieur hors de la région des premières meules (14a, 14b);
b) on la fait passer de la première position de serrage à la deuxième position de serrage;
c) on déplace parallèlement entre elles la pièce en forme de barreau se trouvant dans la deuxième position de serrage et les premières et deuxième meules (14a, 14b, 15) se trouvant sur l'axe de rotation commun (25);
d) jusqu'à ce que la pièce en forme de barreau se trouve dans la zone d'action de la deuxième meule (15).

5. Procédé selon l'une quelconque des revendications 1 à 4, dans lequel on saisit la pièce en forme de barreau dans sa première position de serrage au moyen d'au moins deux pinces de chargement (24) se trouvant sur une station de serrage mobile (6), qui sont adaptées à la section transversale de la pièce en forme de barreau (1) et qui s'appliquent sur les faces longitudinales (3) de la pièce en forme de barreau (1) en s'équilibrant mutuellement l'une contre l'autre.

6. Procédé selon la revendication 5, dans lequel la station de serrage (6) est mobile sur commande dans les directions de l'axe X et de l'axe C.

7. Procédé selon la revendication 5 ou 6, dans lequel les pinces de chargement en équilibre (24) servent également pour déterminer le volume de meulage (31), qui est déterminant pour le déroulement du meulage périphérique dans la deuxième position de serrage.

8. Meuleuse pour le meulage de pièces en forme de barreau (1), qui présentent une section transversale non circulaire, formée par des lignes planes et/ou courbes et des faces frontales planes (2) orientées parallèlement l'une à l'autre, pour la mise en oeuvre du procédé selon l'une quelconque des revendications 3 ainsi que 5 à 7, présentant les caractéristiques suivantes:
a) un socle de machine (4) porte une glissière (5), sur laquelle deux poupées porte-pièce (7a, 7b) sont disposées de façon déplaçable et blocable individuellement ou en commun;
b) les poupées porte-pièce (7a, 7b) sont dotées de mâchoires de serrage (8a, 8b), dont les faces de serrage sont tournées l'une vers l'autre;
c) chaque poupée porte-pièce (7a, 7b) comprend un entraînement de rotation à moteur électrique pour les mâchoires de serrage (8a, 8b) montées sur celle-ci, dans lequel l'axe de rotation et d'entraînement (16) pour les deux mâchoires de serrage (8a, 8b) est géométriquement identique et forme l'axe C d'une opération de meulage;
d) il est prévu un dispositif de commande, qui permet de mettre les deux mâchoires de serrage (8a, 8b) en mouvement de rotation synchrone de même phase, et qui permet en plus de serrer la pièce en forme de barreau (1) entre les mâchoires de serrage (8a, 8b) en ramenant celles-ci contre les faces frontales (2) de la pièce en forme de barreau (1);
e) le socle de machine (4) porte une poupée porte-meule (10) pouvant pivoter autour d'un axe horizontal (11) et se déplacer sur commande dans une direction perpendiculaire à l'axe C, et dont la direction de déplacement définit l'axe X d'une opération de meulage;
f) la poupée porte-meule (10) porte une première (12) et une deuxième (13) broches porte-meule, qui peuvent être amenées au choix dans leur position de meulage par pivotement de la poupée porte-meule (10) autour de l'axe horizontal (11);
g) deux premières meules (14a, 14b), dont la distance D l'une par rapport à l'autre correspond à la longueur L de la pièce en forme de barreau (1), sont montées avec un axe de rotation commun (14c) sur la première broche porte-meule (12);
h) au moins une deuxième meule (15), dont la largeur axiale B recouvre la longueur L de la pièce en forme de barreau (1), est disposée sur la deuxième broche porte-meule (13);
i) une station de serrage (6) est disposée sur la glissière (5), entre les poupées porte-pièce (7a, 7b), station qui peut être déplacée en commande dans la direction de l'axe X avec une partie de socle (6a) et qui présente des pinces de chargement (24) à autocentrage se trouvant sur la partie de socle (6a);
k) la station de serrage (6) est réalisée dans le but de serrer la pièce en forme de barreau (1) sur ses faces longitudinales (3) (première position de serrage) et de déplacer celle-ci, avec une direction longitudinale orientée parallèlement à l'axe C, d'une position de chargement à une position de meulage pour le meulage plan de ses faces frontales libres (2) au moyen des faces larges tournées l'une vers l'autre des premières meules (14a, 14b), et de là à une position de transfert dans la région des mâchoires de serrage (8a, 8b), par lesquelles elle peut être reprise en position serrée côté frontal (deuxième position de serrage);
l) le dispositif de commande est réalisé de façon à effectuer un meulage périphérique commandé par CNC selon le principe de l'interpolation C-X, lorsque la deuxième meule (15) se trouve en position de meulage, avec son axe de rotation (15a) orienté parallèlement à l'axe C.

9. Meuleuse pour le meulage de pièces en forme de barreau (1), qui présentent une section transversale non circulaire, formée par des lignes planes et/ou courbes et des faces frontales planes (2) orientées parallèlement l'une à l'autre, pour la mise en oeuvre du procédé selon l'une quelconque des revendications 4 à 7, présentant les caractéristiques suivantes:
a) un socle de machine (4) porte une glissière (5), sur laquelle deux poupées porte-pièce (7a, 7b) sont disposées de façon déplaçable et blocable individuellement ou en commun;
b) les poupées porte-pièce (7a, 7b) sont dotées de mâchoires de serrage (8a, 8b), dont les faces de serrage sont tournées l'une vers l'autre;
c) chaque poupée porte-pièce (7a, 7b) comprend un entraînement de rotation à moteur électrique pour les mâchoires de serrage (8a, 8b) montées sur celle-ci, dans lequel l'axe de rotation et d'entraînement (16) pour les deux mâchoires de serrage (8a, 8b) est géométriquement identique et forme l'axe C d'une opération de meulage;
d) il est prévu un dispositif de commande, qui permet de mettre les deux mâchoires de serrage (8a, 8b) en mouvement de rotation synchrone de même phase, et qui permet en plus de serrer la pièce en forme de barreau (1) entre les mâchoires de serrage (8a, 8b) en ramenant celles-ci contre les faces frontales (2) de la pièce en forme de barreau (1);
e) le socle de machine (4) porte une broche porte-meule (26) pouvant se déplacer sur commande dans une direction perpendiculaire à l'axe C, dans lequel la direction de déplacement de la broche porte-meule (26) définit l'axe X des opérations de meulage;
f) l'ensemble de meules comprend deux premières meules (14a, 14b), dont la distance axiale D l'une par rapport à l'autre correspond à la longueur L de la pièce en forme de barreau (1), et une deuxième meule (15), dont la largeur axiale B recouvre la longueur L de la pièce en forme de barreau (1);
g) toutes les meules (14a, 14b, 15) sont montées sur un axe de rotation commun (25);
h) une station de serrage (6) est disposée sur la glissière (5), entre les poupées porte-pièce (7a, 7b), station qui peut être déplacée en commande dans la direction de l'axe X et dans la direction de l'axe C avec une partie de socle (6a) et qui présente des pinces de chargement (24) à autocentrage se trouvant sur la partie de socle (6a);
i) la station de serrage (6) est réalisée dans le but de serrer la pièce en forme de barreau (1) sur ses faces longitudinales (3) (première position de serrage) et de déplacer celle-ci, avec une direction longitudinale orientée parallèlement à l'axe C, d'une position de chargement à une position de meulage pour le meulage plan de ses faces frontales libres (2) au moyen des faces larges tournées l'une vers l'autre des premières meules (14a, 14b), et de là à une position de transfert dans la région des mâchoires de serrage (8a, 8b), par lesquelles elle peut être reprise en position serrée côté frontal (deuxième position de serrage);
k) le dispositif de commande est réalisé de façon à effectuer un meulage périphérique commandé par CNC selon le principe de l'interpolation C-X, lorsque la deuxième meule (15) se trouve en position de meulage, avec son axe de rotation (15a) orienté parallèlement à l'axe C.

10. Meuleuse selon la revendication 8 ou 9, dans laquelle le contour périphérique (15b) de la deuxième meule (15) recouvrant la longueur L de la pièce en forme de barreau (1) a une forme qui diffère de la forme cylindrique et qui correspond au contour longitudinal de la pièce en forme de barreau meulée terminée (1).

11. Meuleuse selon la revendication 10, dans laquelle le contour périphérique (15b) de la deuxième meule (15) est également profilé selon la forme d'un chanfrein côté frontal (2a) ou d'un arrondi côté frontal (2b), qui doit être meulé sur la pièce en forme de barreau (1).

12. Meuleuse selon l'une quelconque des revendications 8 à 11, dans laquelle les mâchoires de serrage (8a, 8b; 28a, 28b) sont pourvues d'une garniture de friction (9a, 9b; 29a, 29b) en vue de l'application sur les faces frontales (2) de la pièce en forme de barreau (1).

13. Meuleuse selon l'une quelconque des revendications 8 à 12, dans laquelle les deux faces larges tournées l'une vers l'autre des premières meules (14a, 14b) présentent respectivement, dans leur région périphérique extérieure, une zone annulaire extérieure (21a, 21b) avec une garniture de dégrossissage et une zone annulaire intérieure (22a, 22b) avec une garniture de finition, dans laquelle la distance axiale entre les deux zones annulaires extérieures (21a, 21b) augmente en direction de l'extérieur.

14. Meuleuse selon l'une quelconque des revendications 8 à 14, dans laquelle au moins deux pinces de chargement (24) sont disposées diamétralement sur la partie de socle (6a) de la station de serrage (6) et les faces de saisie (24a) des pinces de chargement (24) sont adaptées à la section transversale de la pièce en forme de barreau (1).

15. Cellule de meulage, dans laquelle deux meuleuses (32, 33) selon l'une quelconque des revendications 8 à 14 sont disposées l'une à côté de l'autre, de telle manière que leurs côtés de commande soient voisins ou tournés l'un vers l'autre et qu'une cellule de chargement commune (34) soit disposée dans l'espace intermédiaire entre les deux meuleuses (32, 33).
